# EUROPÄISCHE PATENTSCHRIFT

(11) **EP 0 544 071 B1**
(45) Veröffentlichungstag und Bekanntmachung des Hinweises auf die Patenterteilung: **14.06.1995**
(21) Anmeldenummer: 92115398.7
(22) Anmeldetag: 09.09.1992
(51) Int. Cl.: B60J 3/02

(54) **Lagerachse für eine, eine Beleuchtungseinrichtung aufweisende Fahrzeugsonnenblende**
Bearing journal for a vehicle sun visor comprising a lighting device
Tourillon d'un pare-soleil de véhicule comportant un dispositif d'éclairage

(30) Priorität: 30.10.1991 DE 4135719
(43) Veröffentlichungstag der Anmeldung: 02.06.1993
(73) Patentinhaber: Gebr. Happich GmbH, D-42097 Wuppertal (DE)
(72) Erfinder: Buchheit, Christian, F-57880 Ham Sous Vasberg (FR); Avez, Jean-Luc, F-91310 Leuville Sur Orge (FR)

(56) Entgegenhaltungen:
- EP-A- 0 447 308
- DE-A- 2 737 215
- DE-A- 3 916 560
- DE-A- 3 932 808

## Beschreibung

Die Erfindung bezieht sich auf eine Lagerachse der im Oberbegriff des Patentanspruchs 1 näher definierten Art.

Eine gattungsgemäße Lagerachse ist in der DE-A-39 16 560 gezeigt. Bei dieser bekannten Lagerachse ist ein zweiteiliger Aufbau, bestehend aus einem inneren Einleger und einem äußeren Ergänzungskörper vorgesehen. Zwischen dem Einleger und dem Ergänzungskörper erstrecken sich zwei isolierte elektrische Leiter. Der Einleger ist mit zwei, zu seiner Mantelfläche hin offene Längsnuten versehen, welche sich über die gesamte Länge des Einlegers erstrecken. In jeder Längsnut liegt ein Kontaktstift und ein damit verbundener elektrischer Leiter. Die Herstellung dieser bekannten Lagerachse erscheint nicht verfahrenssicher, weil nicht auszuschließen ist, daß die elektrischen Leiter beim Formen des Ergänzungskörpers durch den Spritzdruck aus den Längsnuten herausgedrückt und unkontrolliert gegen die Formnestwandung gedrückt werden. In diesem Falle könnten die elektrischen Leiter an der Außenseite der Lagerachse sichtbar werden, was natürlich nicht erwünscht sein kann.

Bei einer anderen, in der DE-A-39 32 808 gezeigten Lagerachse ist vorgesehen, daß diese als Kunststoff-Spritzgußteil mit einer darin durch Umspritzen eingelagerten mit ihren freien Enden aus den Stirnenden der Lagerachse heraustretenden Leiterplatte mit elektrisch leitfähigen Bahnen ausgebildet ist. Dieser an sich guten Lösung steht die Schwierigkeit einer zur Zeit noch zu aufwendigen Leiterplattenherstellung entgegen.

Der Erfindung liegt nun die Aufgabe zugrunde, eine Lagerachse der eingangs genannten Art zu schaffen, bei der die elektrischen Leiter sicher aufgenommen und gehalten sind und damit die Formung des Ergänzungskörpers nicht behindern können. Darüber hinaus wird für die Lagerachse ein relativ einfacher und kostengünstiger Aufbau angestrebt.

Die zur Lösung dieser Aufgabe erfindungsgemäß vorgesehenen Maßnahmen sind im kennzeichnenden Teil des Patentanspruchs 1 angegeben.

Die besonderen Vorteile der Erfindung werden in der sicheren Festlegung der elektrischen Leiter am bzw. im Vorformkörper gesehen, der hierdurch problemlos umspritzt werden kann. Besonders wichtig ist schon die Festlegung der Kontaktstifte am Vorformkörper durch Umspritzen. Die elektrischen Leiter werden schon bei der Herstellung des Vorformkörpers integriert, so daß sich ihre Montage darauf beschränkt, in den Öffnungshohlraum der Vorformkörper-Halbschalen eingelegt zu werden. Dieses Einlegen ist problemlos, weil die elektrischen Leiter schon einendig an den umspritzten Kontaktstiften gehalten sind. Die Aufteilung des Vorformkörpers in zwei Halbschalen bereitet herstellungstechnisch keinerlei Schwierigkeiten und auch das Zusammenklappen der Halbschalen ist unter Einschluß der elektrischen Leiter schnell und mühelos zu bewerkstelligen.

Durch die Maßnahme nach Anspruch 2 wird eine besonders einfache und kostengünstige Herstellung des Vorformkörpers erreicht, weil hierdurch eine Spritzgußform zum Einsatz gelangen kann, die ohne Schieber u. dgl. zur Formgebung und Entformung auskommt.

Die Maßnahme nach Anspruch 3 ist vorgesehen, um ein leichtes, problemloses Zusammenklappen der beiden Halbschalen zu ermöglichen, während die Maßnahme nach Anspruch 4 dazu dient, einen sicheren Zusammenhalt der beiden Halbschalen zu gewährleisten, damit der Ergänzungskörper problemlos um den Vorformkörper herum gespritzt werden kann.

Ein Ausführungsbeispiel der Erfindung wird im folgenden anhand der Zeichnung näher erläutert. Es zeigen:
- Fig. 1: eine Seitenansicht der kompletten Lagerachse,
- Fig. 2: eine ebensolche Ansicht eines in der Lagerachse nach Fig. 1 integrierten Vorformlings,
- Fig. 3: den Vorformling nach Fig. 2 in Blickrichtung X und
- Fig. 4: den Vorformling nach Fig. 2 und 3 im Herstellungszustand.

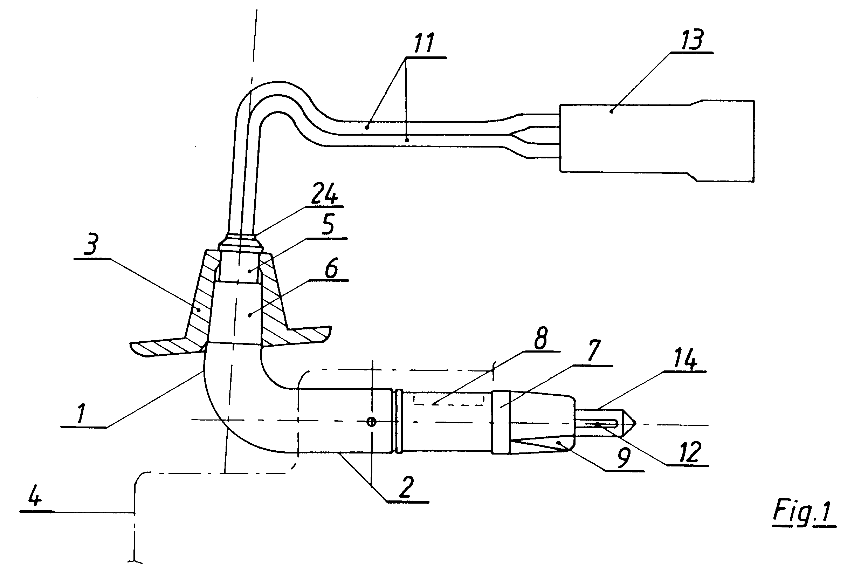

Die neue Lagerachse nach Fig. 1 ist L-förmig ausgebildet und weist einen kurzen Achsschenkel 1 und einen langen Achsschenkel 2 auf. Der kurze Achsschenkel 1 sitzt drehbeweglich in der Lagerbohrung eines Lagerböckchens 3, welches an einer Fahrzeugkarosserie zu befestigen ist. Der lange Achsschenkel 2 greift in ein nicht näher dargestelltes Lagergehäuse ein, welches im strichpunktiert angedeuteten Sonnenblendenkörper 4 angeordnet ist. Die äußere Gestaltung der Lagerachse, wie Zylinderteil 5, Konusteil 6 am kurzen Achsschenkel 1 oder Bund 7, Abflachung 8, Abschrägung 9 am langen Achsschenkel 2 ist bekannter Art und bedarf daher keiner detailierten Erläuterung.

Die neue Lagerachse weist ein inneres und ein äußeres Kunststoff-Spritzgußteil auf. Das innere Kunststoff-Spritzgußteil ist als Vorformkörper 10 ausgebildet und mit zwei isolierten elektrischen Leitern 11 und mit zwei Kontaktstiften 12 bestückt. Die elektrischen Leiter 11, für die bevorzugt ein zweiadriges Flachkabel vorgesehen ist, sind jeweils mit einem Ende elektrisch leitend, z.B. durch eine Preß- oder Lötverbindung an die Kontaktstifte 12 angeschlossen. Anderendig sind die elektrischen Leiter 11 mit Steckelementen 16 bestückt, die ihrerseits in eine Steckergehäuse-Einheit 13 eingesetzt sind.

Der Vorformkörper 10 weist ein Endteil 17 auf, in dem die Kontaktstifte 12 über einen wesentlichen Bereich ihrer Länge durch unmittelbares Umspritzen gelagert sind. Am Endteil 17 befindet sich ein stufenförmig abgesetzter Endbereich 14, der in einer kegelförmigen Spitze 15 endet. Die freien Endbereiche der Kontaktstifte 12 sind in Achsrichtung diametral gegenüberliegend und geringfügig überstehend am Umfang des stufenförmig abgesetzten Endbereichs 14 des Vorformkörpers 10 angeordnet.

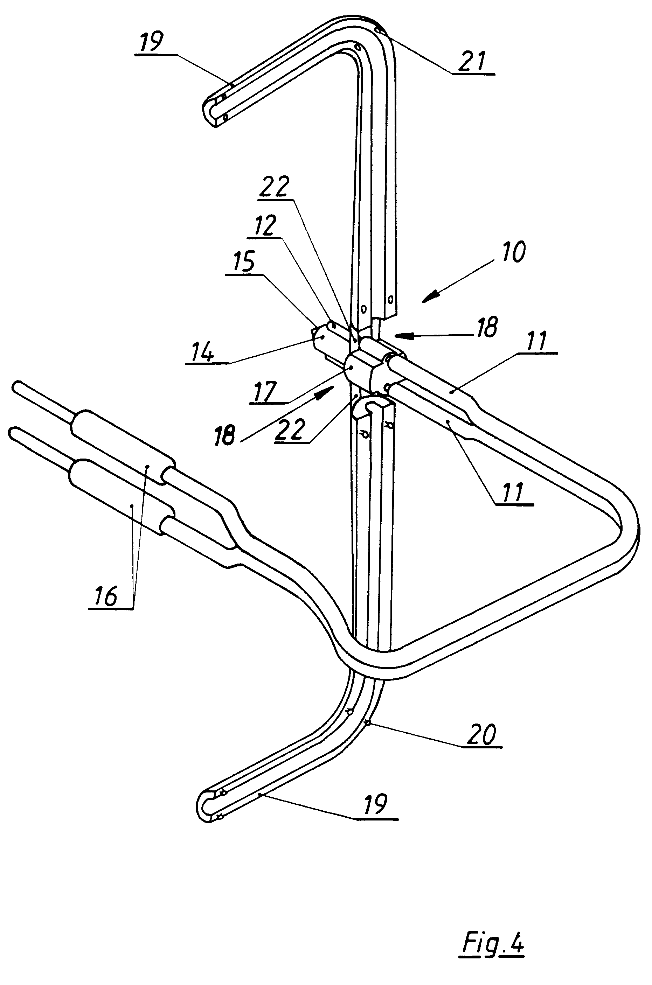

Am Endteil 14 des Vorformkörpers 10 sind jeweils über eine Gelenkanbindung 18 zwei Halbschalen 19 einstückig angeformt. Jede Halbschale 19 ist mit einem einen elektrischen Leiter 11 aufnehmenden Öffnungshohlraum ausgebildet. Die Halbschalen 19 sind unter Einschluß der elektrischen Verbindungsleiter 11 gegeneinander klappbar und aneinander festlegbar, und zwar bevorzugt durch Klipszapfen 20 einerseits und Klipsaufnahmen 21 andererseits. Wie Fig. 4 zeigt, sind die Halbschalen 19 am Endteil 17 an diametral gegenüberliegenden Seiten und jeweils senkrecht zur Längsachse derselben ausgerichtet angeformt. Auch ist aus Fig. 4 ersichtlich, daß die Gelenkanbindungen aus flexiblen Verbindungsstegen 22 bestehen. Im zusammengeklappten Zustand der beiden Halbschalen 19 stützen sich die dem Endteil 17 benachbarten Enden am Endteil 17 an.

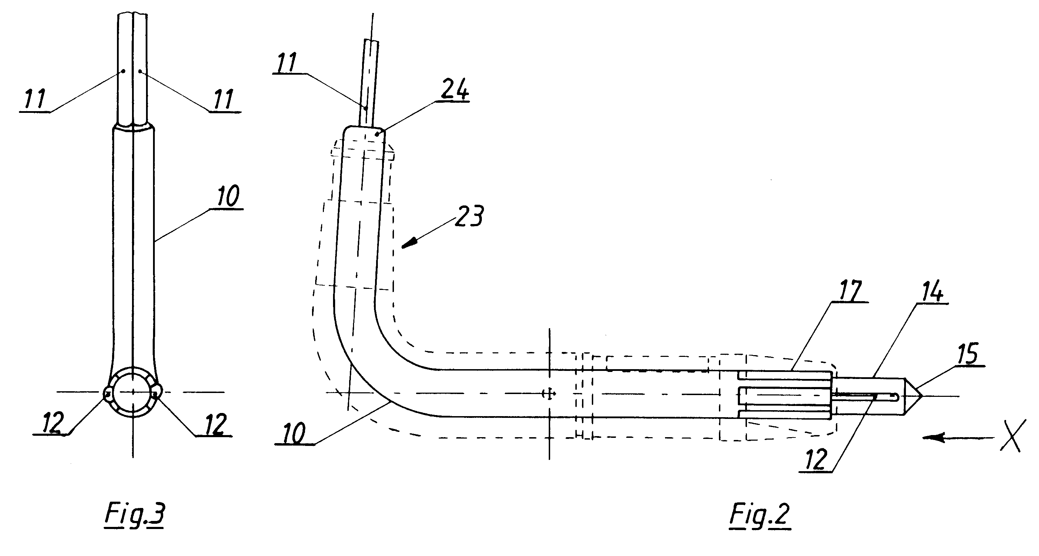

Nach dem Zusammenklappen der Halbschalen 19 ergibt sich der in den Fig. 2 und 3 dargestellte Vorformkörper 10, in dem die Verbindungsleiter 11 und die Kontaktstifte 12 eingelagert sind. Der Vorformkörper 10 mit den elektrischen Verbindungsleitern 11 und den Kontaktstiften 12 wird zu einer Lagerachse nach Fig. 1 vervollständigt, indem er in ein zweites Formnest einer nicht gezeigten Kunststoff-Spritzgußmaschine eingelegt und mit plastifiziertem Kunststoff-Material umspritzt wird. Durch das Umspritzen wird ein den Vorformkörper 10 umhüllender Ergänzungskörper 23, der in Fig. 2 gestrichelt angedeutet ist, gebildet, aus dem der Vorformkörper 10 einendig mit dem Endbereich 14 und anderendig mit dem Endbereich 24 heraustritt. Die Endbereiche 14 und 24 dienen auch dazu, den Vorformkörper 10 zum Umspritzen im Formnest der zugehörigen Spritzgußmaschine lagegerecht zu halten.

Die Funktionsweise der neuen Lagerachse entspricht im wesentlichen der durch die DE-A-39 32 808 bekanntgewordenen Art.

## Patentansprüche

1. Lagerachse für eine, eine Beleuchtungseinrichtung aufweisende Fahrzeugsonnenblende mit L-förmiger Gestaltung, deren einer, kurzer Achsschenkel (1) in einem an der Fahrzeugkarosserie zu befestigenden Lagerböckchen (3) und deren anderer, die Klappachse für den Sonnenblendenkörper bildender langer Achsschenkel (2) in einem im Sonnenblendenkörper angeordneten Lagergehäuse drehbar gelagert ist, bestehend aus einem inneren, L-förmigen, als Kunststoff-Spritzgußteil ausgebildeten Vorformkörper (10), einem äußeren, den Vorformkörper (10) umschließenden L-förmigen Ergänzungskörper (23), der ebenfalls als Kunststoff-Spritzgußteil ausgebildet ist, zwei isolierten elektrischen Verbindungsleitern (11) innerhalb der Lagerachse und aus an den freien, abisolierten Endbereichen der Verbindungsleiter (11) elektrisch leitend angeschlossenen Kontaktelementen (12), von denen zwei als Kontaktstifte (12) ausgebildet und in Achsrichtung diametral gegenüberliegend und zumindest geringfügig überstehend am Umfang des freien Endbereichs des langen Achsschenkels (2) angeordnet sind, wobei der freie Endbereich des langen Achsschenkels (2) aus einem einendig ausgebildeten Endteil des Vorformkörpers (10) gebildet ist, dadurch gekennzeichnet, daß im Endteil (17) des Vorformkörpers (10) die Kontaktstifte (12) über einen Teil ihrer Länge durch Umspritzen eingelagert und gehaltert sind, daß am Endteil (17) über jeweils eine Gelenkanbindung (18) zwei Halbschalen (19) des Vorformkörpers (10) einstückig angeformt sind, daß jede Halbschale (19) mit einem einen elektrischen Verbindungsleiter (11) aufnehmenden Öffnungshohlraum ausgebildet ist und daß die Halbschalen (19) unter Einschluß der elektrischen Verbindungsleiter (11) gegeneinander klappbar und aneinander festlegbar sind.

2. Lagerachse nach Anspruch 1, dadurch gekennzeichnet, daß die Halbschalen (19) am Endteil (17) an diametral gegenüberliegenden Seiten und jeweils senkrecht zur Längsachse desselben ausgerichtet angeformt sind.

3. Lagerachse nach Anspruch 1 oder 2, dadurch gekennzeichnet, daß zwischen dem Endteil (17) und den Halbschalen (19) als Gelenkverbindungen (18) flexible Verbindungsstege (22) ausgebildet sind.

4. Lagerachse nach wenigstens einem der Ansprüche 1 bis 3, dadurch gekennzeichnet, daß die Halbschalen (19) über angeformte Klipszapfen (20) und Klipsaufnahmen (21) aneinander festlegbar sind.

## Claims

1. Bearing journal for a motor vehicle sun visor, having a lighting device and an L-shaped design, whereof one, short journal leg (1) is rotatably mounted in a bearing block (3) which is to be fixed to the vehicle body and the other, long journal leg (2), forming the pivot pin for the sun visor body, is rotatably mounted in a bearing housing arranged in the sun visor body, consisting of an inner, L-shaped premoulding (10) designed as a plastic injection moulding, an outer, L-shaped supplementary body (23) enclosing the premoulding (10) and likewise designed as a plastic injection moulding, two insulated electrical connecting conductors (11) within the bearing journal, and contact elements (12) connected in an electrically conductive manner to the free, uninsulated end regions of the connecting conductors (11), two of which contact elements (12) are designed as contact pins (12) and are arranged, in the axial direction, diametrically opposite and projecting at least slightly on the periphery of the free end region of the long journal leg (2), the free end region of the long journal leg (2) being formed from an end part of the premoulding (10) which is designed at one end, characterized in that the contact pins (12) are installed and retained in the end part (17) of the premoulding (10) by encapsulation over part of their length, in that two half-shells (19) of the premoulding (10) are integrally moulded onto the end part (17) via, in each case, an articulated connection (18), in that each half-shell (19) is designed with an aperture cavity receiving an electrical connecting conductor (11) and in that the half-shells (19) can be folded against each other to enclose the electrical connecting conductors (11) and fixed to each other.

2. Bearing journal according to Claim 1, characterized in that the half-shells (19) are moulded onto the end part (17) on diametrally opposite sides and are in each case oriented perpendicularly to the longitudinal axis of the end part (17).

3. Bearing journal according to Claim 1 or 2, characterized in that flexible connecting webs (22) are formed between the end part (17) and the half-shells (19) as articulated connections (18).

4. Bearing journal according to at least one of Claims 1 to 3, characterized in that the half-shells (19) can be fixed to each other by means of moulded-on clip studs (20) and clip recesses (21).

## Revendications

1. Tourillon d'un pare-soleil de véhicule automobile comportant un dispositif d'éclairage, de forme en L, dont une branche (1) courte est montée tournante dans un support d'appui (3) à fixer sur la carrosserie du véhicule et dont l'autre branche (2) longue, formant l'axe de rabattement du corps du pare-soleil, est montée tournante dans un boîtier monté dans le corps du pare-soleil, constitué d'un corps préformé (10) intérieur, en L, réalisé sous la forme d'un élément en matière plastique moulée par injection, d'un corps de complément (23) en L, extérieur, entourant le corps préformé (10), lequel corps de complément est également réalisé sous la forme d'un élément en matière plastique moulée par injection, de deux conducteurs de connexion (11) électriques, isolés, à l'intérieur du tourillon et d'éléments de contact (12) raccordés de manière électriquement conductrice aux zones d'extrémité libres, isolées, des conducteurs de connexion (11), dont deux éléments sont réalisés sous la forme de broches de contact (12) et sont disposés diamétralement opposés dans la direction axiale et de manière à dépasser au moins légèrement du pourtour de la zone d'extrémité libre de la branche (2) longue du tourilion, la zone d'extrémité libre de la branche (2) longue étant formée par une partie d'extrémité du corps préformé (10), formé à une extrémité, caractérisé en ce que dans la partie d'extrémité (17) du corps préformé (10), les broches de contact (12) sont enrobées et maintenues par injection, sur une partie de leur longueur, en ce qu'à la partie terminale (17) sont formées d'une seule pièce deux demi-coques (19) du corps préformé (10), chacune par une liaison d'articulation (18), en ce que chaque demi-coque (19) présente une cavité d'ouverture logeant un conducteur de connexion (11) électrique et en ce que les demi-coques (19) peuvent être fixées l'une contre l'autre et de manière à se rabattre l'une contre l'autre par inclusion des conducteurs de connexion (11) électriques.

2. Tourillon selon la revendication 1, caractérisé en ce que les demi-coques (19) sont formées sur la partie d'extrémité (17), sur des côtés diamétralement opposés et de manière que chacune soit orientée perpendiculairement à l'axe longitudinal de celle-ci.

3. Tourillon selon la revendication 1 ou 2, caractérisé en ce que des cloisons de liaison (22) flexibles sont formées entre la partie d'extrémité (17) et les demi-coques (19), pour servir de liaisons articulées (18).

4. Tourillon selon l'une au moins des revendications 1 à 3, caractérisé en ce que les demi-coques (19) peuvent être fixées l'une contre l'autre par des tenons de clipsage (20) venus de moulage et des logements de clipsage (21).
